Europäisches Patentamt

European Patent Office

Office européen des brevets

(11) Publication number: **0 348 335**
A2

## (12) EUROPEAN PATENT APPLICATION

(21) Application number: 89630104.1

(22) Date of filing: 14.06.89

(51) Int. Cl.⁴: **B 60 C 11/04**

(30) Priority: 20.06.88 US 208913

(43) Date of publication of application:
27.12.89 Bulletin 89/52

(84) Designated Contracting States:
DE ES FR GB IT LU

(71) Applicant: **THE GOODYEAR TIRE & RUBBER COMPANY**
**1144 East Market Street**
**Akron, Ohio 44316-0001 (US)**

(72) Inventor: **Adam, Georges**
**6, Rue de la Barrière**
**L-7761 Bissen (LU)**

(74) Representative: **Weyland, J.J. Pierre**
**Goodyear Technical Center-Luxembourg**
**L-7750 Colmar-Berg (LU)**

(54) Tire treads and tires.

(57) A tire tread (11) has four deep longitudinally extending grooves (14,15,16,17), two shoulder ribs (18,22), two intermediate ribs (19,21) and a central rib (20). Each shoulder rib (18,22) is free of grooves extending laterally thereacross, while each intermediate rib (19,21) and the central rib (20) are laterally traversed by a series of shallow grooves (30,31,32) having depths (40) in the range of 10-25% of the depth (41) of the deep grooves (14,15,16,17).

FIG. 1

EP 0 348 335 A2

## Description

## TIRE TREADS AND TIRES

The present invention relates to tire treads and to tires provided with such treads.

The features of the present invention which are believed to be novel are set forth with particularity in the appended claims. The present invention, both as to its structure and manner of operation, may best be understood by reference to the following detailed description, taken in accordance with the accompanying drawings in which:

Fig. 1 is a perspective view of a tire according to the invention;

Fig. 2 is a fragmented plan view of a tire tread according to the invention;

Fig. 3 is an enlarged plan view of a portion of the tire tread;

Fig. 4 is a cross-sectional view of the tire tread taken at line 4-4 of Fig. 3; and

Fig. 5 is a perspective view of the tire tread formed into a ring.

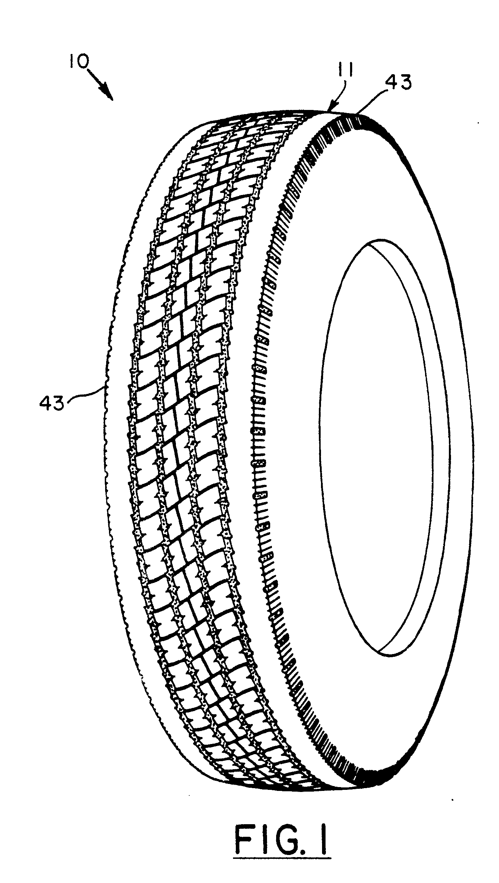

Referring first to Fig. 1, there is shown a pneumatic tire 10 according to one aspect of the invention. It is understood that as used herein and in the claims, the term "tire" refers not only to a newly manufactured tire having the tread and carcass vulcanized at the same time, but also to a tire which is manufactured by providing a previously vulcanized tire carcass with a new tread. The tire 10 has an axis of rotation and a tread 11 extending cirumferentially about said axis. Preferably, the tire is of the type generally known in the tire art as a radial-ply tire, however, it is understood that the present invention applies also to what is known in the art as a bias-ply or bias-belted tire. It is believed that the present invention is most advantageously employed in radial ply truck tires.

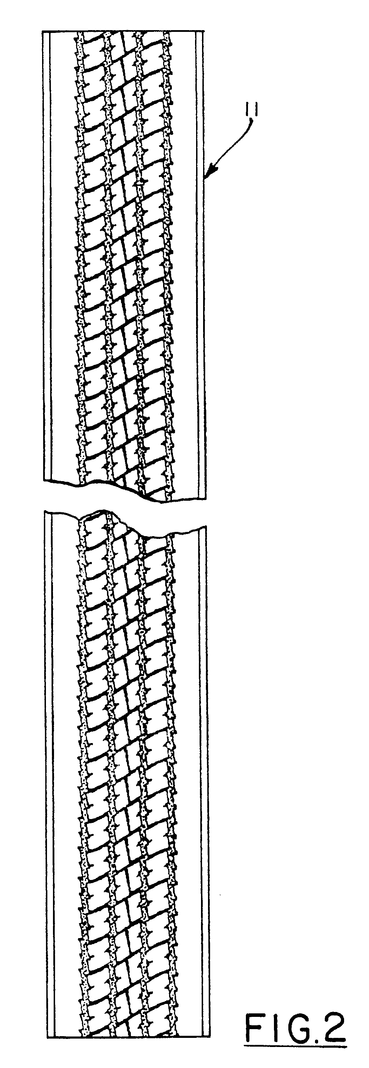

Fig. 2 is a plan view of the tire tread 11, fragmented to emphasize that the actual length of the tire tread is not a limiting factor for the present invention. The tire tread 11 illustrated in Fig. 2 is understood to be a vulcanized elastomeric member having a pattern of grooves and ribs integral therewith. The elastomers used in the tread may contain natural rubber, synthetic rubber, a blend of the two, or any other suitable material. As illustrated in Fig. 1, the buttress 43 adjoining the tread itself may have notches or grooves therein, but this is not considered to be essential to the practice of the present invention, and in fact the buttress may be of a plain configuration as shown in Figs. 2, 3 and 4.

A tire tread according to one aspect of the invention is manufactured as a strip of at least partially vulcanized elastomeric material which is suitable for the purpose of providing a new tread for a previously vulcanized tire carcass. Such an article of manufacture is sometimes referred to in the tire art as precured retread material.

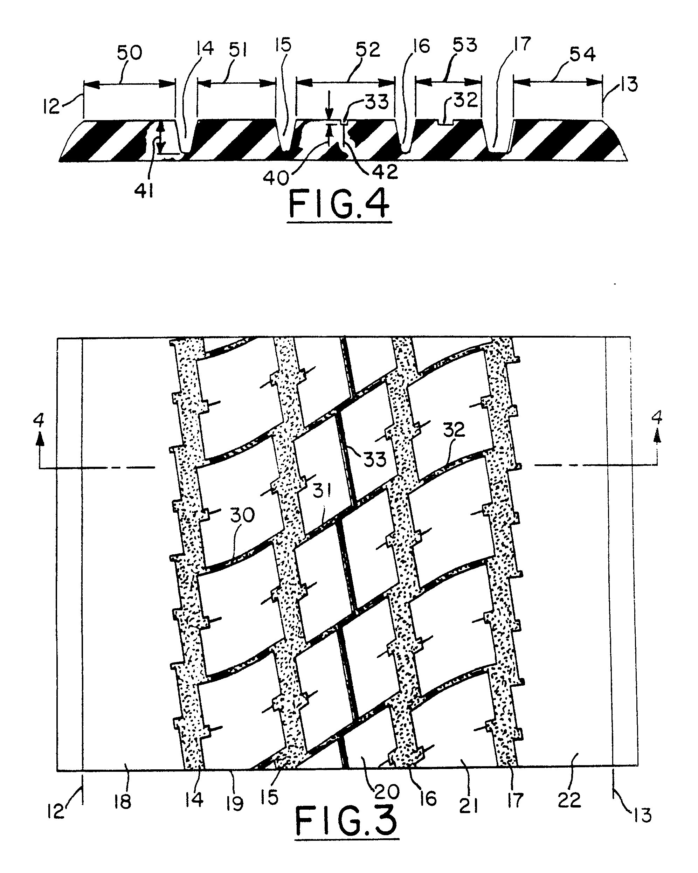

Details of the structure of a tire tread according to the invention, whether it is in the form of precured retread material or a tread which is integral to a tire can best be described by referring to Figs. 3 and 4.

A tread has a pair of shoulders, or tread edges, 12,13, which define the greatest axial width of the footprint of a tire employing the tread. As used herein, the footprint of a tire is understood to refer to the static contact patch of a tire that is mounted upon its specified rim, inflated to its specified inflation pressure, and subjected to its rated load for that specified pressure. The specified values of these parameters may be determined from the manufacturer of the tire, or from an organization which sets industry standards such as the Tire and Rim Association in the U.S.A. or the European Tyre and Rim Technical Organization. A precured tread has four longitudinally extending deep grooves 14,15,16,17 therein. Correspondingly, a tire having a tread according to the invention has four deep grooves 14,15,16,17 extending circumferentially thereabout. In a precured tread, the longitudinally extending deep grooves 14,15,16,17 and the shoulders 12,13 cooperate to define a pair of shoulder ribs 18,22, a central rib 20 and intermediate ribs 19,21 which are interposed between a shoulder rib and the central rib. In a tire having a tread according to the invention extending circumferentially about its axis of rotation, the circumferentially extending deep grooves 14,15,16,17 and the tread edges 12,13 cooperate to define a pair of shoulder ribs 18,22, a central rib 20 and an intermediate rib 19,21 which is interposed between each shoulder rib and the central rib. In each embodiment of the invention it is preferred that the shoulder ribs 18,22 are free of grooves extending laterally thereacross, while each intermediate rib 19,21 and the central rib 20 are laterally traversed by a series of shallow grooves 30,31,32 having depths 40 in the range of 10 to 25% of the depth 41 of said deep grooves 14,15,16,17. In a most preferred embodiment a very narrow slit or groove extends from the base of the shallow grooves 33 to a depth of 60-70% of the depth 41 of the deep grooves 14,15,16,17.

Preferably, the longitudinally or circumferentially extending grooves 14,15,16,17 are zigzag grooves. It is preferred that the shallow grooves 30,32 extending across the intermediate ribs 19,21 follow curved paths. It is further preferred that the shallow grooves 31 extending across the central rib 20 follow straight paths. It is further preferred that the central rib 20 have a longitudinally, or in the case of a tire a circumferentially extending shallow zigzag groove 33 therein having a depth in the range of 10-25% of the depth of said deep grooves 14,15,16,17. The ends of the shallow grooves 31 extending across the central rib 20 are offset longitudinally or circumferentially from the nearest ends of the shallow grooves 30,32 extending across the intermediate ribs 19,21.

It is further preferred that the lateral widths 50,51,52,53,54 of the ribs 18,19,20,21,22 increase progressively from the central rib 20 to the intermediate ribs 19,21 to the shoulder ribs 18,22.

It is felt that the particular tread structure disclosed herein allows the stiffness of the ribs to vary as the tread abrades away during use resulting in relatively uniform wear characteristics across the width of the tread.

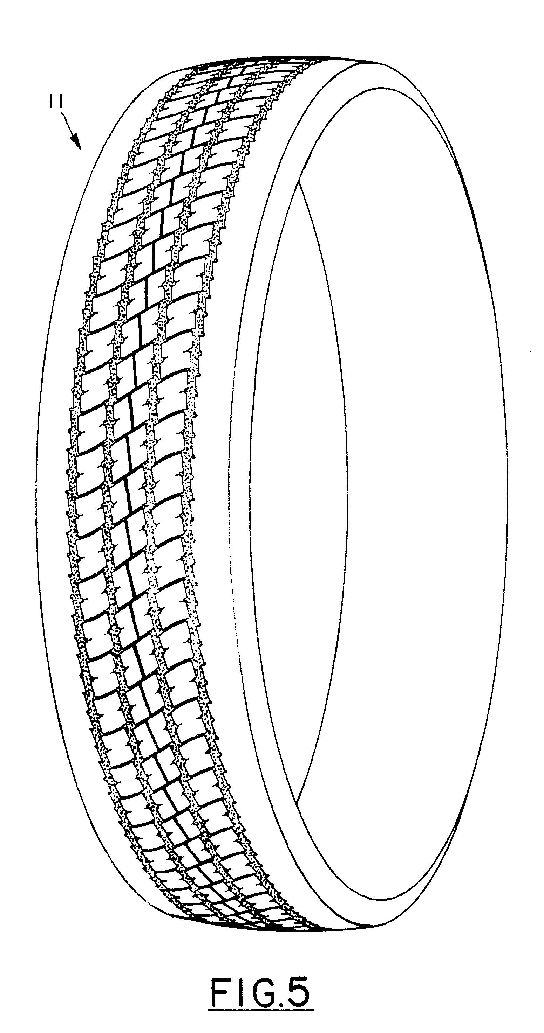

Fig. 5 illustrates an embodiment of a tread according to the invention formed into a ring, which is referred to by tire retreaders as a ring tread. It is understood that the term tire tread is meant to encompass precured retreads of the type illustrated in Fig. 5.

While certain representative embodiments and details have been shown for the purpose of illustrating the invention, it will be apparent to those skilled in the art that various changes and modifications may be made therein without departing from the spirit or scope of the invention.

## Claims

1. A tire tread (11) comprising an elastomeric substance and having a longitudinal axis and a pair of shoulders which define the lateral edges (12,13) of a ground engageable surface of the tread, said ground engageable surface having four longitudinally extending deep grooves (14,15,16,17) therein, said longitudinally extending deep grooves (14,15,16,17) and said shoulders (12,13) cooperating to define a pair of shoulder ribs (18,22), a central rib (20), and an intermediate rib (19,21) interposed between each shoulder rib (18,22) and the central rib, characterized by each intermediate rib (19,21) and the central rib (20) being laterally traversed by a series of shallow grooves (30,31,32), said shallow grooves (30,21,32) having depths in the range of 10 to 25% of the depth of said deep grooves (14,15,16,17).

2. A tire tread (11) according to claim 1 characterized by each shoulder rib (18,22) being free of grooves extending laterally thereacross.

3. A tire tread according to claim 2 characterized by said longitudinally extending grooves (14,15,16,17) being zigzag grooves.

4. A tire tread (11) according to claim 2 characterized by the shallow grooves (30,32) extending across the intermediate ribs (19,21) following curved paths.

5. A tire tread (11) according to claim 3 characterized by the shallow grooves (30,32) extending across the intermediate ribs (19,21) following curved paths.

6. A tire tread (11) according to any one of claims 1 to 5 characterized by the shallow grooves (31) extending across the central rib (20) follow straight paths.

7. A tire tread (11) according to claim 6 characterized by said central rib (20) having a longitudinally extending shallow zigzag groove (33) therein having a depth in the range of 10-25% of the depth of said deep grooves (14,15,16,17).

8. A tire tread (11) according to any of the preceding claims characterized by the ends of the shallow grooves (31) extending across the central rib (20) being longitudinally offset from the nearest ends of the shallow grooves extending across the intermediate ribs (19,21).

9. A tire (10) having an axis of rotation and comprising a tread (11) extending circumferentially about said axis , said tread having a pair of axially spaced apart tread edges (12,13), said tread having four deep grooves (14,15,16,17) therein which extend circumferentially thereabout, said circumferentially extending grooves (14,15,16,17) and said tread edges (12,13) cooperating to define a pair of shoulder ribs (18,22), a central rib (20), and an intermediate rib (19,21) interposed between each shoulder rib (18,22) and the central rib (20), characterized by each intermediate rib (19,21) and the central rib (20) being laterally traversed by a series of shallow grooves (30,31,32) having depths in the range of 10 to 25% of the depth of said deep grooves (14,15,16,17).

10. A tire (10) according to claim 9 characterized by each shoulder rib (18,22) being free of grooves extending laterally thereacross.

11. A tire (10) according to claim 9 characterized by said circumferentially extending grooves (14,15,16,17) being zigzag grooves.

12. A tire (10) according to claim 10 characterized by said circumferentially extending grooves (14,15,16,17) being zigzag grooves.

13. A tire (10) according to claim 11 characterized by the shallow grooves (30,32) extending across the intermediate ribs (19,21) following curved paths.

14. A tire (10) according to any one of claims 9 to 13 characterized by the shallow grooves (31) extending across the central rib (20) follow a straight path.

15. A tire (10) according to claim 14 characterized by said central rib (20) having a shallow zigzag groove (33) therein which extends circumferentially thereabout and has a depth in the range of 10-25% of the depth of said deep grooves (14,15,16,17).

16. A tire (10) according to any of the preceding claims characterized by the ends of the shallow grooves (31) extending across the central rib (20) being circumferentially offset from the nearest ends of the shallow grooves (30,32) extending across the intermediate ribs (19,21).

FIG. I

FIG.2

FIG.4

FIG.3

FIG.5